# EUROPEAN PATENT SPECIFICATION

(11) **EP 1 572 407 B1**
(45) Date of publication and mention of the grant of the patent: **03.01.2007**
(21) Application number: 03812253.7
(22) Date of filing: 22.09.2003
(51) Int. Cl.: B23C 5/22

(54) **TANGENTIAL CUTTING INSERT AND MILLING CUTTER**
TANGENTIALSCHNEIDEINSATZ UND FRÄSWERKZEUG
PLAQUETTE AMOVIBLE DE COUPE TANGENTIELLE ET FRAISE

(30) Priority: 04.12.2002 IL 15325202
(43) Date of publication of application: 14.09.2005
(73) Proprietor: Iscar Ltd., 24959 Tefen (IL)
(72) Inventor: SATRAN, Amir, 25147 Kfar Vradim (IL); DAGAN, Danny, 22445 Nahariya (IL)
(74) Representative: Vossius & Partner
(86) International application number: PCT/IL2003/000757
(87) International publication number: WO 2004/050283

(56) References cited:
- EP-A- 0 885 678
- DE-A- 19 743 971
- US-B1- 6 227 772
- US-B1- 6 238 146

## Description

### FIELD OF THE INVENTION

The present invention relates to a tangential indexable cutting insert according to the preamble of claim 1 and a milling cutter equipped with such a tangential cutting insert for use in metal cutting processes in general and for milling a square shoulder in a workpiece in particular. Such a tangential cutting insert and a milling cutter are known from WO 96/35536.

### BACKGROUND OF THE INVENTION

Tangential cutting inserts, also known as on-edge, or lay down, cutting inserts, are oriented in an insert holder in such a manner that during a cutting operation on a workpiece the cutting forces are directed along a major (thicker) dimension of the cutting insert. An advantage of such an arrangement being that the cutting insert can withstand greater cutting forces than when oriented in such a manner that the cutting forces are directed along a minor (thinner) dimension of the cutting insert.

There is disclosed in EP 0 769 341 a face milling cutter employing a double-sided indexable tangential cutting insert having a prismoidal shape with two opposed generally rectangular rake surfaces connected by side surfaces. The cutting insert has a basic "negative" geometry and therefore in order to provide the necessary clearance between the cutting insert and the workpiece, when mounted in a face-mill, the cutting insert is oriented with a negative axial rake angle. However, negative axial rake angles are disadvantageous, e.g., they have been found to be deficient in cutting efficiency for applications involving difficult to machine materials.

A double-sided indexable tangential cutting insert for a boring tool head is disclosed in US 5,333,972. The insert is provided at each end with a protruding flat island. Each long cutting edge is inclined at an angle of 3° relative to the protruding flat island, defining an "insert axial rake angle". Rearward of each cutting edge is a descending land surface that merges with an increasing incident angle surface to form a chip breaker groove. Each increasing incident angle surface extends from its associated descending land surface to an adjacent island, at either the top or the bottom of the cutting insert. The cutting insert is left or right handed. It is manufactured to be right-handed and, when flipped around, is left-handed. It will be appreciated that the magnitude of the insert axial rake angle is limited for practical reasons. Any increase in the insert axial rake angle will result in an increase in the "vertical" extent of the increasing incident angle surface (see Fig. 3 of US 5,333,972) that will have an adverse effect on chip development and evacuation.

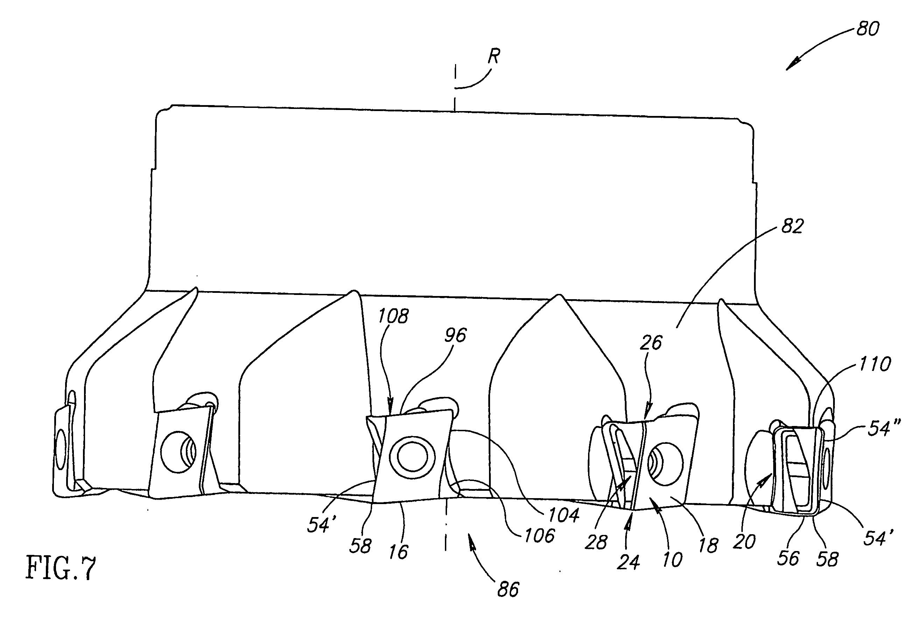

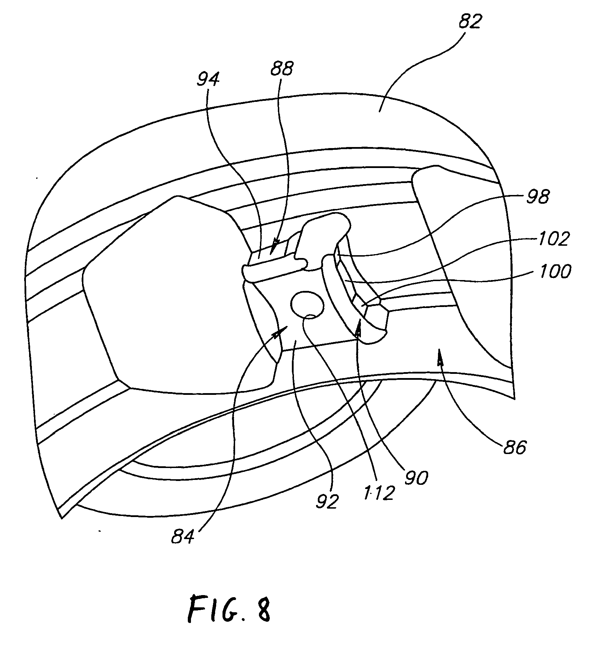

WO 96/35536 discloses a double-sided indexable tangential cutting insert according to the preamble of claim 1, which when mounted in a face-mill has a positive axial rake angle, even when the necessary clearance between the cutting insert and the workpiece is provided. This cutting insert presents two peripheral cutting edges for a right-hand face mill and two peripheral cutting edges for a left-hand face mill. In a side view (see Fig. 9) the cutting insert is generally rhomboidal in shape. The main cutting edges 10 of each end surface are parallel (see also Figs. 7 and 8) to each other and to a centrally located protruding abutment member 12. The cutting insert is retained in an insert pocket with the abutment member of a non-operative end surface and an adjacent non-operative relief surface in abutment with respective support surfaces of the insert pocket. The abutment member of the non-operative end surface and the adjacent non-operative relief surface merge at an acute-angled mounting corner. In order to change the axial rake angle of the operative cutting edge, either the insert pocket has to be rotated, or a cutting insert having a mounting corner with a different mounting angle has to be used. In either case, a different milling cutter has to be used. Moreover, the axial rake and relief angles are interdependent and any change in the axial rake angle results in a corresponding change in the relief angle, which is not always desirable.

It is an object of the present invention to provide a double-sided indexable tangential cutting insert that substantially overcomes the above-mentioned problems.

It is a further object of the present invention to provide a double-sided indexable tangential cutting insert having four main cutting edges, for a given direction of rotation of the milling cutter, each main cutting edge having a positive axial rake angle when mounted as an operative cutting edge in a milling cutter.

It is yet a further object of the present invention to provide a double-sided indexable tangential cutting insert capable of milling a square shoulder in a workpiece.

### SUMMARY OF THE INVENTION

In accordance with the present invention there is provided a tangential cutting insert, for use in a milling cutter with the features of claim 1.

Preferred embodiments are disclosed in the dependent claims.

Typically, the leading section of each major cutting edge extends from adjacent a respective raised corner to at least the minor plane.

Preferably, each cutting edge further comprises a minor cutting edge and a corner cutting edge formed, respectively, by the intersection of minor and corner side surfaces with either end surface.

Further preferably, the two end surfaces have 180° rotational symmetry about a first axis passing therethrough.

Yet further preferably, the major side surfaces have 180° rotational symmetry about a second axis passing therethrough, the second axis being perpendicular to the first axis.

Yet further preferably, the two minor side surfaces have 180° rotational symmetry about a third axis passing therethrough, the third axis being perpendicular to the first axis and the second axis.

If desired, each minor side surface is divided into two minor side sub-surfaces by a major plane along a join where the major plane intersects the minor side surface, each minor side sub-surface extending away from the join at an angle α with respect to a plane passing through the join and parallel to the minor plane.

Generally, the angle α is in the range of one to two degrees.

Preferably, in an end-view of the cutting insert the abutment surface is elongated in form having two long edges extending between two short edges.

Preferably, the two short edges are substantially parallel.

Further preferably, a larger portion of one of the two short edges is located on one side of the major plane and a larger portion of the other one of the two short edges is located on the opposite side of the major plane.

There is also provided a milling cutter comprising:
at least one cutting insert in accordance with the present invention; and
a cutter body having at least one insert pocket in which the at least one cutting insert is retained, the at least one insert pocket comprising adjacent side and rear walls generally transverse to a base, the rear wall being generally convex; the side wall being provided with an axial location surface that abuts a given minor side surface of the at least one cutting insert at a given axial abutment region; the rear wall being provided with two protruding tangential location surfaces, located on either side of a central region of the rear wall, a first of the two tangential location surfaces abuts a first tangential abutment surface located on the abutment surface of the at least one cutting insert, a second of the two tangential location surfaces abuts a second tangential abutment surface located on the abutment surface.

Preferably, the given axial abutment region is located on a forward region of a radially outer minor side sub-surface of the given minor side surface, the forward region being distal the rear wall of the insert pocket.

Further preferably, the first and second tangential abutment surfaces are located on opposite sides of the minor plane.

### BRIEF DESCRIPTION OF THE DRAWINGS

For a better understanding, the invention will now be described, by way of example only, with reference to the accompanying drawings in which:
**Fig. 1** is a perspective view of a cutting insert in accordance with the present invention;
**Fig. 2** is a first side view of the cutting insert in Fig. 1;
**Fig. 3** is an end view of the cutting insert shown in Fig. 1;
**Fig. 4** is a second side view of the cutting insert shown in Fig. 1;
**Fig. 5** is a cross-sectional view of the cutting insert shown in Fig. 1 taken along V-V in Fig. 4;
**Fig. 6A** is a partial cross section of the cutting insert shown in Fig. 1 taken along VIA-VIA in Fig. 3.
**Fig. 6B** is a partial cross section of the cutting insert shown in Fig. 1 taken along VIB-VIB in Fig. 3.
**Fig. 6C** is a partial cross section of the cutting insert shown in Fig. 1 taken along VIC-VIC in Fig. 3.
**Fig. 7** is a perspective view of a milling cutter in accordance with the present invention; and
**Fig. 8** is a perspective view of a portion of the cutter body of the milling cutter in accordance with the present invention, showing in detail an insert pocket.

### DETAILED DESCRIPTION OF THE INVENTION

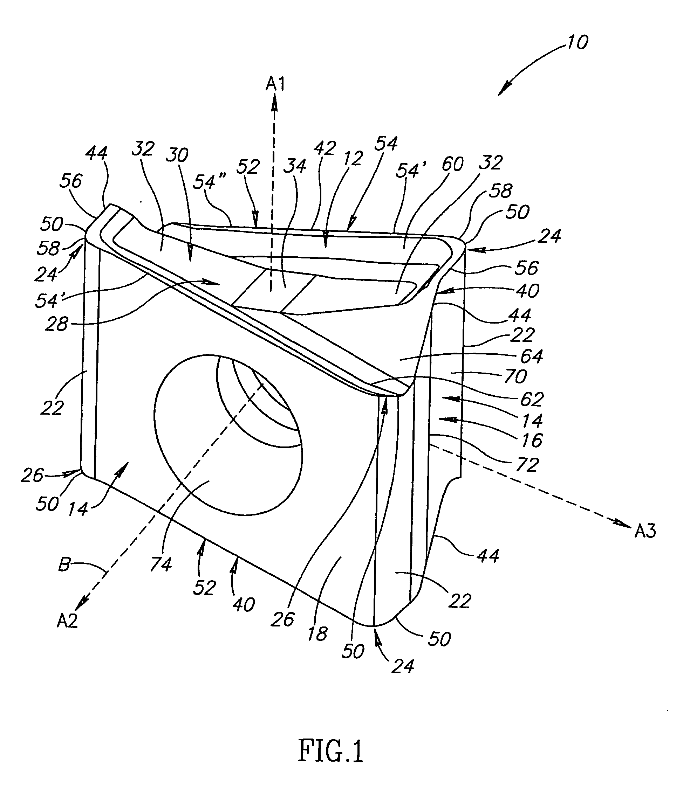

Attention is first drawn to Figs. 1 to 5, showing a cutting insert **10** in accordance with the present invention. The cutting insert **10** is tangential and indexable, and is typically manufactured by form-pressing and sintering carbide powders. The cutting insert **10** is generally rectangular in an end view and has two identical opposing end surfaces **12.** Each end surface **12** has 180° rotational symmetry about a first axis **A1** passing through the two end surfaces **12.**

A peripheral side surface **14** extends between the two opposing end surfaces **12** and comprises two opposed identical minor side surfaces **16,** two opposed identical major side surfaces **18,** and four opposed corner side surfaces **22.** Each pair of adjacent minor and major side surfaces **16, 18** merge at a common corner side surface **22.** The two identical opposing major side surfaces **18** each have 180° rotational symmetry about a second axis **A2** which is perpendicular to the first axis **A1** and passes through the opposing major side surfaces **18.** Similarly, the two identical opposing minor side surfaces **16** each have 180° rotational symmetry about a third axis **A3** passing through the opposing minor side surfaces **16.** The third axis **A3** is perpendicular to the first axis **A1** and to the second axis **A2**. A minor plane **P1** of the cutting insert is defined by the first axis **A1** and the second axis **A2,** a major plane **P2** of the cutting insert **10** is defined by the first axis **A1** and the third axis **A3** and a median plane **M** is defined by the second axis **A2** and the third axis **A3.**

Each end surface **12** has four corners, two diagonally opposed lowered corners **24** and two diagonally opposed raised corners **26.** The lowered corners **26** are closer to the median plane **M** than the raised corners **24.** Each corner side surface **22** extends between a given raised corner **26** of one of the two opposing end surfaces **12** and a given lowered corner **26** of the other of one of the two opposing end surfaces **12.** Each end surface **12** is provided with an abutment member **28** having an abutment surface **30** which is generally concave or V-shaped in form. In accordance with a preferred embodiment the abutment surface **30** comprises three generally flat portions, two outer portions **32** with an inner portion **34** therebetween.

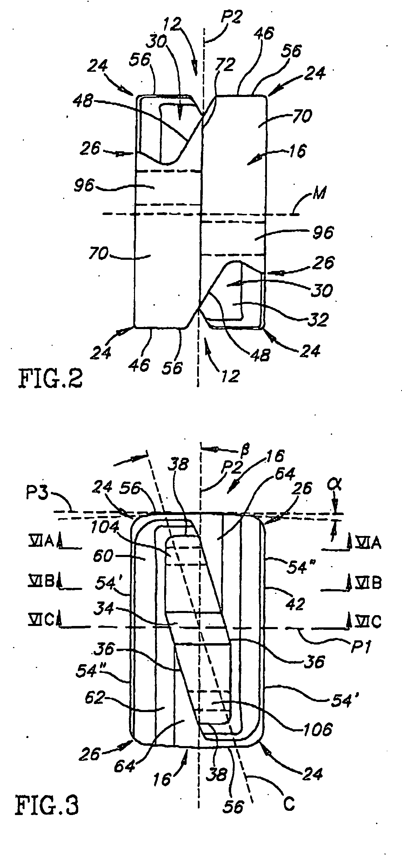

Referring to Fig. 3, it can be seen that in an end-view of the cutting insert **10** the abutment surface **30** has the form of a distorted parallelogram, having two long edges 36 extending between two short edges **38.** Therefore, each outer flat portion **32** of the abutment surface **30,** extends from a respective short edge **38** to the inner flat portion **34.** The two short edges **38** are preferably substantially parallel to each other. As can be seen in Fig. 3, in an end view of the cutting insert **10,** a longitudinal axis **C** of the abutment member **28** makes an acute angle **β** with the major plane **P2,** so that the two short edges **38** are substantially located on opposite sides of the major plane **P2.** In other words, a larger portion of one of the two short edges 38 is located on one side of the major plane **P2** and a larger portion of the other one of the two short edges **38** is located on the opposite side of the major plane.

A peripheral edge **40** is formed at the intersection of each end surface **12** and the peripheral side surface **14.** For each end surface **12,** the peripheral edge **40** comprises two major edges **42,** formed by the intersection of the major side surfaces **18** with the end surface **12;** two minor edges **44,** formed by the intersection of the minor side surfaces 16 with the end surface **12;** and two corner edges **42,** formed by the intersection of the corner side surfaces **22** with the end surface **12.**

In the cutting insert **10** of the present invention at least two sections of each peripheral edge **40** constitute cutting edges **52.** Each cutting edge **52** comprises a major cutting edge **54,** extending from a respective raised corner **24** along substantially the whole length of its associated major edge **42;** a minor cutting edge **56,** extending along at least half of the length of its associated minor edge **44;** and a corner cutting edge **58,** associated with a raised corner **24** and at which the major and minor cutting edges **54, 56** merge. Adjacent each cutting edge **52** in the end surfaces **12** is a rake surface **60** along which chips, removed from a workpiece during a milling operation, flow. A leading section **54'** of each major cutting edge **54** extends from adjacent a respective raised corner **24** to at least the minor plane **P1** and a trailing section **54"** extends from the leading section **54'** to a respective lowered corner **26.** Between the rake surface **60** adjacent the trailing section **54"** and the abutment member **28** there is a chip groove **62.** The portion of the abutment member **28** adjacent the chip forming groove **62** constitutes a chip deflector **64.**

Referring to Fig. 2, it is seen that each minor side surface **16** is divided into two minor side sub-surfaces **70** by a join **72** where the major plane **P2** intersects the minor side surface **16.** Each minor side sub-surface **70** extends away from the join **72** at an acute angle a with respect to a plane **P3** passing through the join **72** and parallel to the minor plane **P1.** In accordance with a specific application this angle is approximately 1.5°. The cutting insert is provided with a through bore **74** extending between the major side surfaces **18** and having a bore axis **B** coinciding with the second axis **A2.**

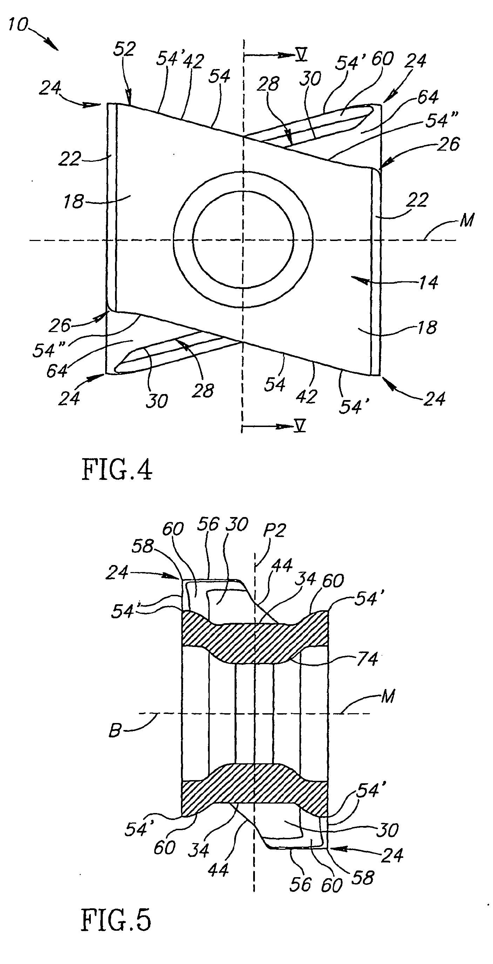

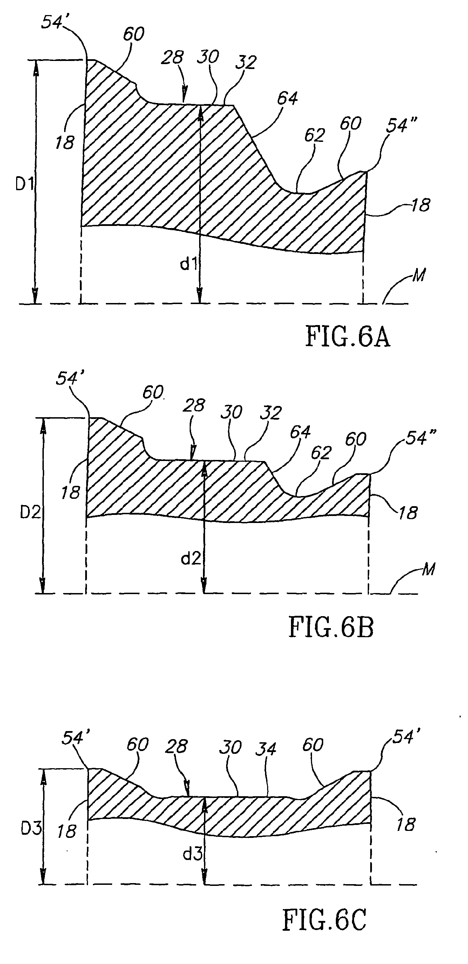

As can be seen in Figs. 6A to 6C, in each cross section of the cutting insert taken in a plane parallel to the minor plane **P1** of the cutting insert **10,** the abutment surface **30** of a particular end surface **12** is closer to the median plane **M** than a leading section **54'** of one of the major cutting edges **54** of the particular end surface **12.** For example, in the cross section shown in Fig. 6A, the leading section **54'** of the major cutting edge **54** to the left of the figure, is located at a distance **D1** from the median plane **M,** whereas, the respective abutment surface **30** is located at a distance **d1,** where **D1** is greater than **d1.** Similarly, in the cross section shown in Fig. 6B, the leading section **54'** of the major cutting edge **54** is located at a distance **D2** from the median plane **M,** whereas, the abutment surface **30** is located at a distance **d2,** where **D2** is greater than **d2.** Similarly, in the cross section shown in Fig. 6C, taken at the location of the minor plane **P1,** the leading section **54'** of the major cutting edge **54** is located at a distance **D3** from the median plane **M,** whereas, the abutment surface **30** is located at a distance **d3,** where **D3** is greater than **d3.** In other words, the abutment member **28** in the region of the leading section **54'** of major cutting edge **54** and up to, and a little beyond the minor plane **P1** (as can be seen in Fig. 4), does not protrude above the major cutting edge **54.** As a consequence, chips cut from a workpiece in the region leading section **54'** of the major cutting edge **54** are well formed during a milling process. However, in the region of the trailing section **54"** of the major cutting edge **54,** the chip deflector **64** protrudes above the major cutting edge **54** (as can be seen in Fig. 4 and on the right hand side of Figs 6A and 6B), which can disturb the development of the chips.

In order to reduce the influence of the chip deflector **64** in the region of the trailing section **54",** the abutment member **28** is designed to be more distant from the major cutting edge **54** in the region of the trailing section **54"** than it is in the region of the leading section **54'.** Consequently, as described above, in an end view of the cutting insert **10,** the longitudinal axis **C** of the abutment member **28** makes an acute angle β with the major plane **P2,** Although the shape of the major cutting edge **54** is shown in Fig. 4 to be generally straight in a side view, it can have any desired shape as long as generally slopes downwardly from the raised corner **24** to the lowered corner **26.** With reference to Fig. 2, it can be seen that in a side view of the minor side surface **16,** the minor edge **44** is clearly divided into two sections, a first section **46** extending from the raised corner **24** to a little way before the major plane **P2** and a second section **48** extending from the first section **46** to the lowered corner **26.** The first section **46** is approximately straight and is perpendicular to the major side surface **18** in a side view (see Fig. 2) and is oriented at the angle α with respect to the plane **P3** in an end view (see Fig. 3). The second section **48** extends from adjacent the major plane **P2** slopingly towards the lowered corner **26** in a side view (see Fig. 2) and is oriented at the angle α with respect to the plane **P3** in an end view (see Fig. 3). It is the first section **46** of the minor edge **44** that forms the minor cutting edge **56.**

Attention is now drawn to Fig. 7, showing a milling cutter **80** with an axis of rotation **R,** having a cutter body **82** provided with a plurality of insert pockets **84.** In each insert pocket **84** a cutting insert **10** in accordance with the present invention is clamped by means of a clamping screw (not shown). The axial rake angle will generally be in the range of 5° to 20°. As can be seen, each cutting insert is seated so that there will be a clearance between a workpiece (not shown) and the cutting insert's minor side surface **16** adjacent the milling cutter's face **86.** The structure of the insert pocket **84** is shown in detail in Fig. 8. The insert pocket **84** comprises adjacent side and rear walls **88, 90** generally transverse to a base **92.**

The rear wall **90** is generally convex and the side wall **88** is provided with an axial location surface **94** for abutting a given minor side surface **16** of the cutting insert **10** at an axial abutment region 96. The rear wall **90** is provided with two protruding tangential location surfaces, an upper tangential location surface **98,** adjacent the pocket side wall **88** and a lower tangential location surface **100.** The two tangential location surfaces are located on either side of a central region **102** of the rear wall **90.** The upper tangential location surface **98** abuts an upper tangential abutment surface **104** located on the abutment surface **30** of the cutting insert **10.** The lower tangential location surface **100** abuts a lower tangential abutment surface **106** located on the abutment surface **30.** Clearly, the terms "lower" and "upper" used here with respect to the abutment surface **30** are used only when the cutting insert **10** is mounted in the milling cutter **80,** and with respect to the orientation shown in Fig. 7. Similarly, with respect to Fig. 7, the axial abutment region **96** is located on a forward region **108** of a radially outer minor side sub-surface **110,** the forward region being distal the rear wall of the insert pocket **90.**

As can be seen in Fig. 3, the two tangential abutment surfaces **104, 106** on each abutment surface **30** are located on opposite sides of the minor plane. As can be seen in Fig. 2, each minor side sub-surface **70** is provided with one axial abutment region **96** adjacent a lowered corner **26.** The base **92** of the insert pocket **84** is provided with a threaded bore **112** for receiving a clamping screw in order to secure the cutting insert **10** in the insert pocket **84.** When the cutting insert **10** is secured in the insert pocket **84,** a radially inner major side surface 20 will abut the base **92** of the insert pocket **84.** Preferably, the major side surfaces **18** of the cutting insert **10** are ground. Further preferably, the minor side sub-surfaces **70** are ground. With these surfaces ground, good positioning of the cutting insert **10** in the insert pocket **84** is ensured.

Although the present invention has been described to a certain degree of particularity, it should be understood that various alterations and modifications could be made without departing from the scope of the invention as hereinafter claimed.

## Claims

1. A tangential cutting insert (10), for use in a milling cutter (80), comprising:
two identical opposing end surfaces (12) of a generally rectangular shape in an end view of the cutting insert (10);
a peripheral side surface (14) extending between the two opposing end surfaces (12), the peripheral side surface (14) comprising two identical opposing major side surfaces (18) of a generally parallelogrammatic shape, two opposing minor side surfaces (16) and corner side surfaces (22) located between adjacent major and minor side surfaces (18, 16); and
a peripheral edge (40) formed at the intersection of each end surface (12) and the peripheral side surface (14), two sections of each peripheral edge (40) constituting cutting edges (52);
each cutting edge (52) comprising a major cutting edge (54) formed by the intersection of a given major side surface (18) with a given end surface (12); each end surface (12) having four corners (24, 26) and being provided with an abutment member (28) having an abutment surface (30);
**characterised in that**
the four corners (24, 26) of the end surface comprise
two diagonally opposed lowered corners (26) and two diagonally opposed raised corners (24), the lowered corners (26) being closer to a median plane **M** of the cutting insert (10) than the raised corners (24);
wherein, in each cross section of the cutting insert (10) taken in a plane parallel to a minor plane **P1** of the cutting insert (10), the abutment surface (30) of a particular end surface (12) is closer to the median plane **M** than a leading section (54') of one of the major cutting edges (54) of the particular end surface (12).

2. The cutting insert (10) according to claim 1, wherein the leading section (54') of each major cutting edge (54) extends from adjacent a respective raised corner (24) to at least the minor plane **P1.**

3. The cutting insert (10) according to claim 1, wherein each cutting edge (52) further comprises a minor cutting edge (56) and a corner cutting edge (58) formed, respectively, by the intersection of minor and corner side surfaces (16, 22) with either end surface (12).

4. The cutting insert (10) according to claim 1, wherein the two end surfaces (12) have 180° rotational symmetry about a first axis **A1** passing therethrough.

5. The cutting insert (10) according to claim 4, wherein the major side surfaces (18) have 180° rotational symmetry about a second axis **A2** passing therethrough, the second axis **A2** being perpendicular to the first axis **A1.**

6. The cutting insert (10) according to claim 5, wherein the two minor side surfaces (16) have 180° rotational symmetry about a third axis **A3** passing therethrough, the third axis **A3** being perpendicular to the first axis **A1** and the second axis **A2.**

7. The cutting insert (10) according to claim 1, wherein each minor side surface (16) is divided into two minor side sub-surfaces (70) by a major plane P2 along a join (72) where the major plane **P2** intersects the minor side surface (16), each minor side sub-surface (70) extending away from the join (72) at an angle α with respect to a plane **P3** passing through the join (72) and parallel to the minor plane **P1.**

8. The cutting insert (10) according to claim 7, wherein the angle α is in the range of one to two degrees.

9. The cutting insert (10) according to claim 8, wherein in an end-view of the cutting insert (10) the abutment surface (30) is elongated in form having two long edges (36) extending between two short edges (38).

10. The cutting insert (10) according to claim 9, wherein the two short edges (38) are substantially parallel.

11. The cutting insert (10) according to claim 9, wherein a larger portion of one of the two short edges (38) is located on one side of the major plane **P2** and a larger portion of the other one of the two short edges (38) is located on the opposite side of the major plane **P2**.

12. A milling cutter (80) comprising:
at least one cutting insert (10) in accordance with any one of claims 1 to 11; and
a cutter body (82) having at least one insert pocket (84) in which the at least one cutting insert (10) is retained, the at least one insert pocket (84) comprising adjacent side and rear walls (88, 90) generally transverse to a base (92), the rear wall (90) being generally convex; the side wall (88) being provided with an axial location surface (94) that abuts a given minor side surface (16) of the at least one cutting insert (10) at a given axial abutment region (96); the rear wall (90) being provided with two protruding tangential location surfaces (98, 100), located on either side of a central region (102) of the rear wall (90), a first of the two tangential location surfaces (98, 100) abuts a first tangential abutment surface located on the abutment surface (30) of the at least one cutting insert (10), a second of the two tangential location surfaces (98, 100) abuts a second tangential abutment surface located on the abutment surface (30).

13. The milling cutter (80) according to claim 12, wherein the given axial abutment region (96) is located on a forward region (108) of a radially outer minor side sub-surface (110) of the given minor side surface (16), the forward region (108) being distal the rear wall (90) of the insert pocket (84).

14. The milling cutter (80) according to claim 12, wherein the first and second tangential abutment surfaces (104, 106) are located on opposite sides of the minor plane P1.

## Patentansprüche

1. Tangentialschneideinsatz (10) zur Verwendung in einem Fräswerkzeug (80), aufweisend:
zwei identische gegenüberliegende Endflächen (12) mit einer im Allgemeinen rechteckigen Form in einer Endansicht des Schneideinsatzes (10);
eine Umfangsseitenfläche (14), die sich zwischen den zwei gegenüberliegenden Endflächen (12) erstreckt, wobei die Umfangsseitenfläche (14) zwei identische gegenüberliegende Hauptseitenflächen (18) mit einer im Allgemeinen parallelogrammartigen Form, zwei gegenüberliegende Nebenseitenflächen (16) und zwischen benachbarten Haupt- und Nebenseitenflächen (18, 16) befindliche Eckenseitenflächen (22) aufweist; und
eine Umfangskante (40), die im Schnitt jeder Endfläche (12) und der Umfangsseitenfläche (14) ausgebildet ist, wobei zwei Abschnitte jeder Umfangskante (40) die Schneidkanten (52) bilden;
wobei jede Schneidkante (52) eine Hauptschneidkante (54) aufweist, die durch den Schnitt einer gegebenen Hauptseitenfläche (18) und einer gegebenen Endfläche (12) gebildet wird;
wobei jede Endfläche (12) vier Ecken (24, 26) aufweist und mit einem eine Anlagefläche (30) aufweisenden Anlageelement (28) versehen ist;
**dadurch gekennzeichnet, dass**
die vier Ecken (24, 26) der Endfläche aufweisen:
zwei diagonal gegenüberliegende abgesenkte Ecken (26) und zwei diagonal gegenüberliegende angehobene Ecken (24), wobei die abgesenkten Ecken (26) näher an einer Mittelebene M des Schneideinsatzes (10) als die angehobenen Ecken (24) liegen;
wobei in jedem Querschnitt des Schneideinsatzes (10) in einer Ebene parallel zu einer Nebenebene P1 des Schneideinsatzes (10) die Anlagefläche (30) einer speziellen Endfläche (12) näher an der Mittelebene M als ein vorderer Abschnitt (54') von einer der Hauptschneidkanten (54) der speziellen Endfläche (12) liegt.

2. Schneideinsatz (10) nach Anspruch 1, wobei der vordere Abschnitt (54') jeder Hauptschneidkante (54) sich aus der Umgebung einer entsprechenden angehobenen Ecke (24) wenigstens bis zu der Nebenebene P1 erstreckt.

3. Schneideinsatz (10) nach Anspruch 1, wobei jede Schneidkante (52) ferner eine Nebenschneidkante (56) und eine Eckenschneidkante (58) aufweist, welche jeweils durch den Schnitt von Neben- und Eckenseitenflächen (16, 22) mit jeder Endfläche (12) gebildet werden.

4. Schneideinsatz (10) nach Anspruch 1, wobei die zwei Endflächen (12) eine 180°-Rotationssymmetrie um eine erste Achse A1 aufweisen, die **dadurch** hindurch verläuft.

5. Schneideinsatz (10) nach Anspruch 4, wobei die Hauptseitenflächen (18) eine 180°-Rotationssymmetrie um eine zweite Achse A2 aufweisen, die **dadurch** hindurch verläuft, wobei die zweite Achse A2 senkrecht zur ersten Achse A1 ist.

6. Schneideinsatz (10) nach Anspruch 5, wobei die zwei Nebenseitenflächen (16) eine 180°-Rotationssymmetrie um eine dritte Achse A3 aufweisen, die **dadurch** hindurch verläuft, wobei die dritte Achse A3 senkrecht zu der ersten Achse A1 und der zweiten Achse A2 ist.

7. Schneideinsatz (10) nach Anspruch 1, wobei jede Nebenseitenfläche (16) in zwei Nebenseitenteilflächen (70) durch eine Hauptebene P2 entlang einer Verbindungsstelle (72) unterteilt ist, wo die Hauptebene P2 die Nebenseitenfläche (16) schneidet, wobei sich die Nebenseitenteilfläche (70) von der Verbindungsstelle (72) in einem Winkel α in Bezug auf eine durch die Verbindungsstelle (72) verlaufende Ebene P3 und parallel zu der Nebenebene P1 erstreckt.

8. Schneideinsatz (10) nach Anspruch 7, wobei der Winkel α in dem Bereich von 1 bis 2° liegt.

9. Schneideinsatz (10) nach Anspruch 8, wobei in einer Endansicht des Schneideinsatzes (10) die Anlagefläche (30) in der Form länglich mit zwei langen Kanten (36) ist, die sich zwischen zwei kurzen Kanten (38) erstrecken.

10. Schneideinsatz (10) nach Anspruch 9, wobei die zwei kurzen Kanten (38) im Wesentlichen parallel sind.

11. Schneideinsatz (10) nach Anspruch 9, wobei sich ein größerer Abschnitt von einer der zwei kurzen Kanten (38) auf einer Seite der Hauptebene P2 befindet und sich ein größerer Abschnitt von der anderen der zwei kurzen Kanten (38) auf der gegenüberliegenden Seite der Hauptebene P2 befindet.

12. Fräswerkzeug (80), aufweisend:
wenigstens einen Schneideinsatz (10) nach einem der Ansprüche 1 bis 11; und
einen Schneidkörper (82) mit wenigstens einer Einsatztasche (84), in welcher der wenigstens eine Schneideinsatz (10) festgehalten wird, wobei die wenigstens eine Einsatztasche (84) benachbarte Seiten- und Rückwände (88, 90) im Allgemeinen quer zu einer Basis (92) aufweist, wobei die Rückwand (90) im Allgemeinen konvex ist; die Seitenwand (88) mit einer axialen Lokalisierungsfläche (94) versehen ist, die an einer gegebenen Nebenseitenfläche (16) des wenigstens einen Schneideinsatzes (10) bei einem gegebenen axialen Anlagebereich (96) anliegt; die Rückwand (90) mit zwei vorspringenden tangentialen Lokalisierungsflächen (98, 100) versehen ist, die sich auf jeder Seite eines mittigen Bereichs (102) der Rückwand (90) befinden, wobei eine erste von den zwei tangentialen Lokalisierungsflächen (98, 100) an einer ersten tangentialen Anlagefläche anliegt, die sich auf der Anlagefläche (30) des wenigstens einen Schneideinsatzes (10) befindet, und eine zweite von den zwei tangentialen Lokalisierungsflächen (98, 100) an einer zweiten tangentialen Anlagefläche anliegt, die sich auf der Anlagefläche (30) befindet.

13. Fräswerkzeug (80) gemäß Anspruch 12, wobei sich der gegebene axiale Anlagebereich (96) auf einem vorderen Bereich (108) einer radial äußeren Nebenseitenteilfläche (110) der gegebenen Nebenseitenfläche (16) befindet, und sich der vordere Bereich (108) entfernt von der Rückwand (90) der Einsatztasche (84) befindet.

14. Fräswerkzeug (80) gemäß Anspruch 12, wobei sich die ersten und zweiten tangentialen Anlageflächen (104, 106) auf gegenüberliegenden Seiten der Nebenebene P1 befinden.

## Revendications

1. Pièce rapportée de coupe tangentielle (10) à utiliser dans une fraise (80) comprenant :
deux surfaces terminales opposées identiques (12) possédant une configuration généralement rectangulaire dans une vue terminale de la pièce rapportée de coupe (10) ;
une surface latérale périphérique (14) s'étendant entre les deux surfaces terminales opposées (12), la surface latérale périphérique (14) comprenant deux surfaces latérales majeures opposées identiques (18) possédant une configuration généralement en forme de parallélogramme, deux surfaces latérales mineures opposées (16) et des surfaces latérales cunéiformes (22) disposées entre des surfaces latérales majeures et mineures adjacentes (18, 16) ; et
un bord périphérique (40) formé à l'intersection de chaque surface terminale (12) et de la surface latérale périphérique (14), deux sections de chaque bord périphérique (40) constituant des arêtes tranchantes (52) ;
chaque arête tranchante (52) comprenant une arête tranchante majeure (54) formée par l'intersection d'une surface latérale majeure donnée (18) avec une surface terminale donnée (12) ;
chaque surface terminale (12) possédant quatre coins (24, 26) et étant munie d'un membre de butée (28) possédant une surface de butée (30) ;
**caractérisée en ce que**
les quatre coins (24, 26) des surfaces terminales comprennent deux coins abaissés (26) opposés en direction diagonale et deux coins surélevés (24) opposés en direction diagonale, les coins abaissés (26) étant plus près d'un plan médian M de la pièce rapportée de coupe (10) que les coins surélevés (24) ;
dans chaque section transversale de la pièce rapportée de coupe (10), prise dans un plan parallèle à un plan mineur P1 de la pièce rapportée de coupe (10), la surface de butée (30) d'une surface terminale particulière (12) est plus proche du plan médian M qu'une section avant (54') d'une des arêtes tranchantes majeures (54) de la surface terminale particulière (12).

2. Pièce rapportée de coupe (10) selon la revendication 1, dans laquelle la section avant (54') de chaque arête tranchante majeure (54) s'étend depuis un endroit adjacent à un coin surélevé respectif (24) jusqu'à au moins le plan mineur P1.

3. Pièce rapportée de coupe (10) selon la revendication 1, dans laquelle chaque arête tranchante (52) comprend en outre une arête tranchante mineure (56) et une arête tranchante cunéiforme (58), formées, respectivement, par l'intersection de surfaces latérales mineures et de surfaces latérales cunéiformes (16, 22) avec l'une ou l'autre surface terminale (12).

4. Pièce rapportée de coupe (10) selon la revendication 1, dans laquelle les deux surfaces terminales (12) possèdent une symétrie de rotation de 180° autour d'un premier axe A1 qui les traverse.

5. Pièce rapportée de coupe (10) selon la revendication 4, dans laquelle les surfaces latérales majeures (18) possèdent une symétrie de rotation de 180° autour d'un deuxième axe A2 qui les traverse, le deuxième axe A2 étant perpendiculaire au premier axe A1.

6. Pièce rapportée de coupe (10) selon la revendication 5, dans laquelle les deux surfaces latérales mineures (16) possèdent une symétrie de rotation de 180° autour d'un troisième axe A3 qui les traverse, le troisième axe A3 étant perpendiculaire au premier axe A1 et au deuxième axe A2.

7. Pièce rapportée de coupe (10) selon la revendication 1, dans laquelle chaque surface latérale mineure (16) est subdivisée en deux sous-surfaces latérales mineures (70) par un plan majeur P2 le long d'une ligne de jonction (72) à laquelle le plan majeur P2 coupe la surface latérale mineure (16), chaque sous-surface latérale mineure (70) s'écartant de la ligne de jonction (72) en formant un angle α par rapport à un plan P3 passant par la ligne de jonction (72) et parallèle au plan mineur P1.

8. Pièce rapportée de coupe (10) selon la revendication 7, dans laquelle l'angle α se situe dans la plage de un à deux degrés.

9. Pièce rapportée de coupe (10) selon la revendication 8, dans laquelle, dans une vue terminale de la pièce rapportée de coupe (10), la surface de butée (30) est de forme allongée possédant deux bords longs (36) s'étendant entre deux bords courts (38).

10. Pièce rapportée de coupe (10) selon la revendication 9, dans laquelle les deux bords courts (38) sont essentiellement parallèles.

11. Pièce rapportée de coupe (10) selon la revendication 9, dans laquelle une portion plus grande d'un des deux bords courts (38) vient se disposer sur un côté du plan majeur P2 et une portion plus grande de l'autre des deux bords courts (38) vient se disposer sur le côté opposé du plan majeur P2.

12. Fraise (80) comprenant :
au moins une pièce rapportée de coupe (10) selon l'une quelconque des revendications 1 à 11 ; et
un corps de coupe (82) possédant au moins une poche pour pièce rapportée (84) dans laquelle est retenue ladite au moins une pièce rapportée de coupe (10), ladite au moins une poche pour pièce rapportée (84) comprenant des parois latérales et dorsales adjacentes (88, 90) généralement transversales à une base (92), la paroi dorsale (90) étant généralement convexe ; la paroi latérale (88) est munie d'une surface de positionnement axiale (94) qui vient buter contre une surface latérale mineure donnée (16) de ladite au moins une pièce rapportée de coupe (10) dans une zone de butée axiale donnée (96) ; la paroi dorsale (90) est munie de deux surfaces de positionnement tangentielles saillantes (98, 100) disposées de part et d'autre d'une zone centrale (102) de la paroi dorsale (90), une première des deux surfaces de positionnement tangentielles (98, 100) venant buter contre une première surface de butée tangentielle disposée sur la surface de butée (30) de ladite au moins une pièce rapportée de coupe (10), une deuxième des deux surfaces de positionnement tangentielles (98, 100) venant buter contre une deuxième surface de butée tangentielle disposée sur la surface de butée (30).

13. Fraise (80) selon la revendication 12, dans laquelle la zone de butée axiale donnée (96) est disposée dans une zone avant (108) d'une sous-surface latérale mineure externe (110) en direction radiale de la surface latérale mineure donnée (16), la zone avant (108) étant disposée en position distale par rapport à la paroi dorsale (90) de la poche pour pièce rapportée (84).

14. Fraise (80) selon la revendication 12, dans laquelle les première et deuxième surfaces de butée tangentielles (104, 106) sont disposées sur des côtés opposés du plan mineur P1.
